# EUROPEAN PATENT SPECIFICATION

(11) **EP 2 414 198 B1**
(45) Date of publication and mention of the grant of the patent: **19.08.2015**
(21) Application number: 10710025.7
(22) Date of filing: 22.03.2010
(51) Int. Cl.: B60R 13/08, F02B 77/11, F16L 59/00, F01N 13/14, B32B 3/28

(54) **STRUCTURED METAL HEAT SHIELD**
STRUKTURIERTES METALLHITZESCHILD
PROTECTEUR THERMIQUE MÉTALLIQUE STRUCTURÉ

(30) Priority: 01.04.2009 CH 535092009
(43) Date of publication of application: 08.02.2012
(73) Proprietor: Autoneum Management AG, 8406 Winterthur (CH)
(72) Inventor: CAPRIOLI, Davide, CH-8400 Winterthur (CH); MELNYKOWYCZ, Mark, CH-8404 Winterthur (CH)
(74) Representative: van Adrichem Geisseler, Johanna
(86) International application number: PCT/EP2010/053658
(87) International publication number: WO 2010/112354

(56) References cited:
- EP-A1- 1 985 439
- US-A- 5 792 539

## Description

The invention is directed to a 3D structured metal sheet for heat shields and a heat shield used in the automotive and truck industry.

In the automotive production there is a significant demand for lightweight construction using metal sheet components. The use of thinner sheets is essential in achieving the weight reduction. However serious problems occur during forming since the rigidity of the formed part decreases as sheet thickness decreases. Moreover the formability also deceases with decreasing sheet thickness.

Increasing metal sheet component rigidity while reducing weight can be achieved by substituting steel with aluminium, magnesium or titanium alloys; or by using a three-dimensional (3D) structured metal sheet. The 3D structure enhances the mechanical properties of components primarily by increasing bending stiffness because of increased inertia (the higher the structure, the stiffer the sheet). Strain hardening, which occurs during the structuring process, also improves the rigidity of the product.

A 3D structured metal sheet is defined as a sheet of metal with a raised relief from the surface of the metal sheet also known as embossments. Raising the surface into these bosses or protuberances can be achieved for instance by pressure against a die roller cut. Another form of making a relief pattern into a sheet of metal is by indentation whereby small surface depressions are made by striking or pressing. In the further description the terms "embossing" and "embossment" are used for both the process and product of indentation and embossment.

3D Structured metal sheet can be produced by rolling, mostly between 2 rollers with at least one roller having a surface in the form of the wanted 3D structure, by embossing between two press plates or by hydro forming. Rolling is a continuous process and pressing can only be run in a semi-continuous process. These processes normally create high strain-hardening.

Heat shields are classically made from metal sheet material, mainly steel, alloys, or aluminium, the material being used for the supporting sheet, cover sheet and also for the insulation. However, other materials like glass fibre, felt material and also special plastic and mineral foams can be used against high temperatures and noise, particularly as the insulation material. For instance, US 5901428 shows examples for 3D structured sheets used in a heat shield. The 3D structure is in the form of pyramidal points formed by embossed dimples and the so formed sheet is used in a stack of structured sheets to form a heat shield barrier with stand-offs to form air pockets. US2006/0194025 discloses another example of a multi-layer heat shield with complementary contours or dimples formed in adjacent layers. The dimples are formed with a stamping die.

EP1985439 discloses a surface structure around the opening in a heat shield with raised and lower areas whereby the lower areas are arranged in virtual lines, parallel or in an angle to each other whereby the raised areas are formed in the areas enclosed by these virtual lines. According to this publication it is possible but problematic to form the pattern disclosed on the full area of the heat shield, due to the pressure needed to form the pattern.

To increase the effectiveness of the heat shield and reduce the space required for the shield, the metal sheet or stack of sheets may be contoured to closely resemble the shape of the outer surface of for instance the exhaust manifold. To provide the desired contour in metal sheet, the resulting outer metal layer of a heat shield typically includes a number of wrinkles. These wrinkles not only reduce the aesthetic appearance, they are also the place where the fatigue of the product can be observed first.

Most of the known 3D structure patterns used today are made of a repeated single form. US6966402 discloses a pattern with a plurality of dimples formed in a geometric shape selected from a group consisting of a spherical shape, a pyramidal shape, a conical shape or a trapezoidal shape and where the dimples are distributed in an offset of, or uniform rows and columns or in a randomised pattern. EP0439046 discloses a 3D pattern in the form of a diamond shaped cross-hatching pattern, which allows the sheet to be stretched and compressed as needed. Also the use of wrinkling or dimpling is disclosed, for instance a plurality of creases or ridges such as in the shape of corrugations. US6821607 discloses the use of knobs having a draped or folded type structure, which increases the compression resistance for the individual knobs and therefore increases the bending strength of the entire sheet material.

All these patterns have in common that to form the embossment the material is stretched around a dimple placed as a stand-alone feature in the overall pattern. By this stretching, material is displaced away from the neutral plane of the flat metal sheet adding to the bending rigidity. If the dimples are placed close enough to each other, then the material between the dimples will be partly offset compared to the neutral plane of the flat metal sheet. The flanks of the embossments will start overlapping. However, the peak of the dimple will always form the highest offset point. Due to the common embossing patterns used and the chosen dimple form the bending rigidity is optimised in one direction or two directions of the plane, however at the expense of other directions in the same plane for instance by forming unwanted bending lines, e.g. lines where the metal sheet becomes very easy to bend.

It is therefore an object of the invention to obtain a 3D structured metal sheet with increased bending stiffness in a plurality of directions of the plane of the sheet such that the bending stiffness of the 3D structured metal sheet is more equal in all directions.

This object is achieved by metal sheet having the 3D structures of claim 1.

Regular network is defined as a regular repeating pattern of embossments connected to each other to form a raised network above the surface of the metal sheet.

The thus formed 3D structured metal sheet has increased bending properties in multiple direction of the plane of the sheet. This is due to the network formed and to the intersection of the embossments, by forming studs. These studs will increase the bending stiffness of possible bending lines additionally. Therefore it is feasible to use thinner sheets of metal reducing material weight and cost in the final product.

The 3D structural sheet with the pattern according to the invention can be used in single heat shields as well as in multi layer heat shields. The heat shields themselves can be formed to follow the form of the source of the heat, like for instance the motor, the exhaust or the under-floor of the car. In this case the 3D structured metal sheet is no longer flat but curved, in which case the neutral surface is no longer a plane but follows the curved surface.

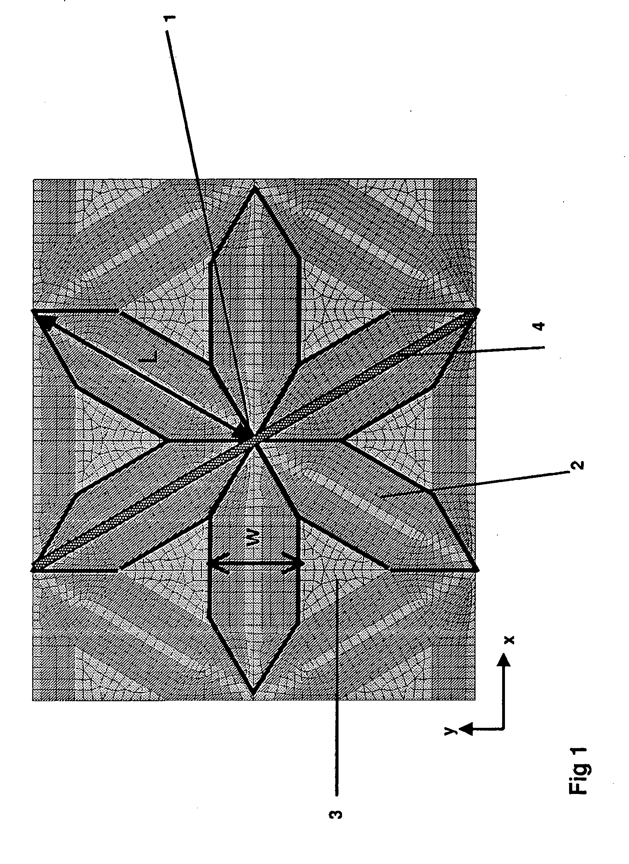

Figure 1 gives a schematic drawing of an example of a 3D structure not belonging to the invention. This figure is used to explain and define the overall parameters of the pattern in general and without limitation to the specific network shown.

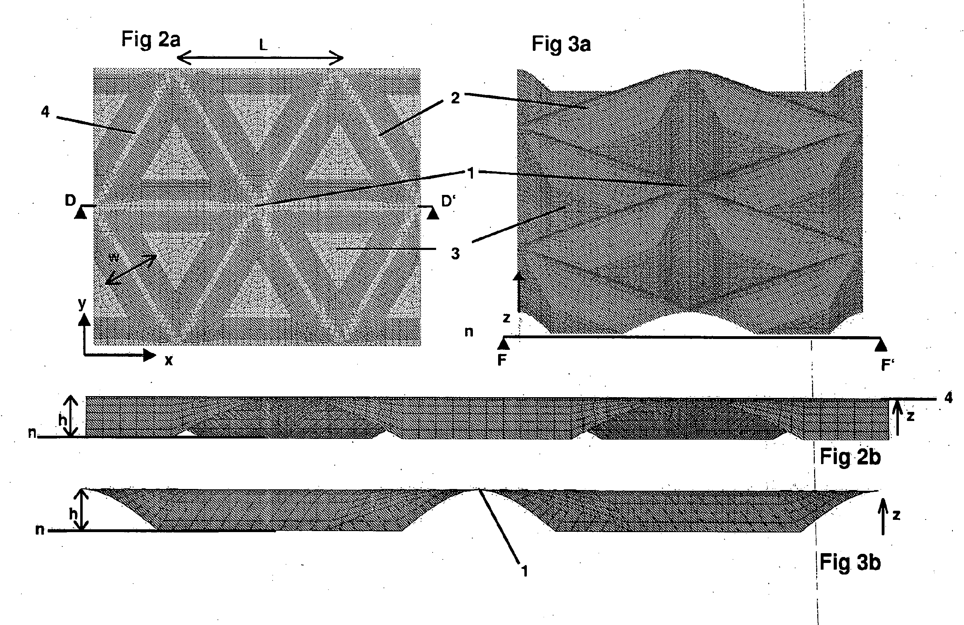

The embossment 2 has preferably the form of an elongated shape, whereby the area 4 is raised essentially parallel to the surface of the neutral plane n of the metal sheet to a maximum distance h away from the neutral plane n. The embossment 1 thus formed is like a hollow tunnel (see figure 2b and 3b), with height h, forming the backbone of the network. The form of the arch of the tunnel is preferably rounded or elliptic formed.

The distance between two connected junctions' gives the length L of the embossment 2. The form of the embossment lengthwise can be a rounded, straight or in a curved form. However they are connected in junctions with other embossments to form an overall network over the surface of the metal sheet.

The width is given as the longest distance between the sidewalls of each embossment, whereby the sidewalls are displaced material between the top area 4 of the embossment and the material that was not raised and stayed on the neutral plane (for instance the triangle 3 in this example).

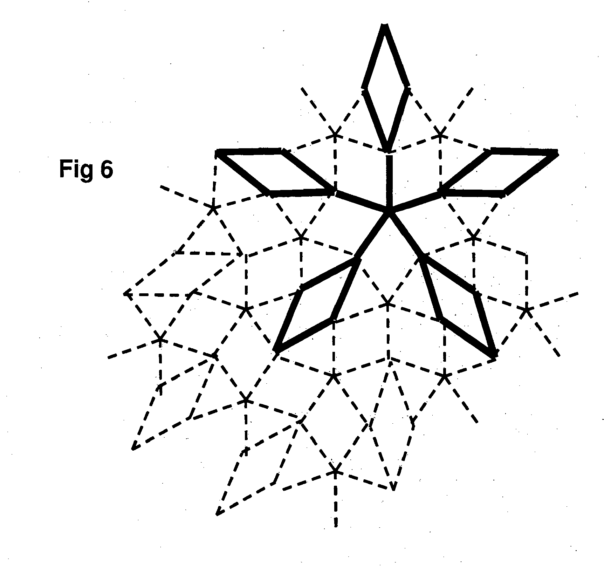

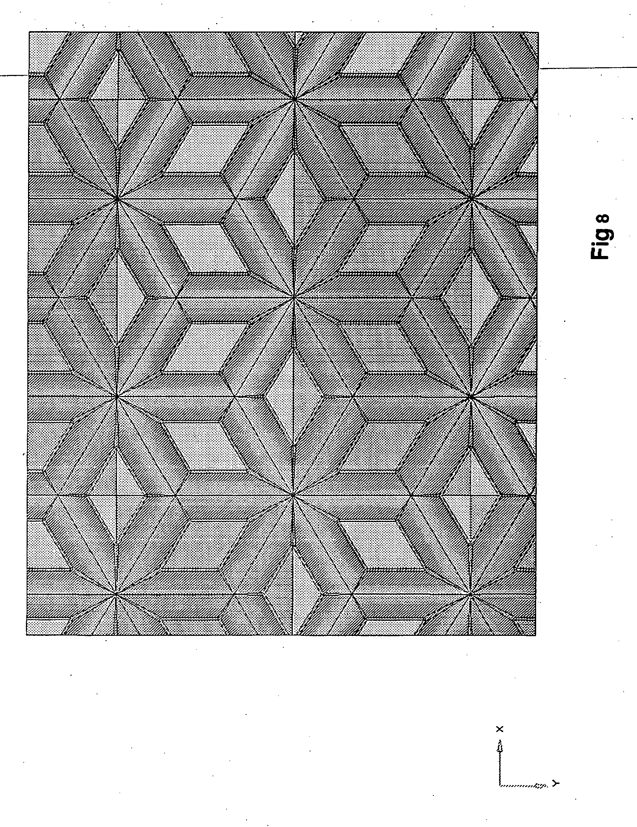

To form a network, it is not necessary that the embossments be all the same. It is also feasible to form a regular network with different length of embossments and/or with different shapes. According to the invention the number of embossments converging in the junctions varies Examples of different network are given in figures 6 and 8. The schematic line drawings are giving the top of the network pattern formed.

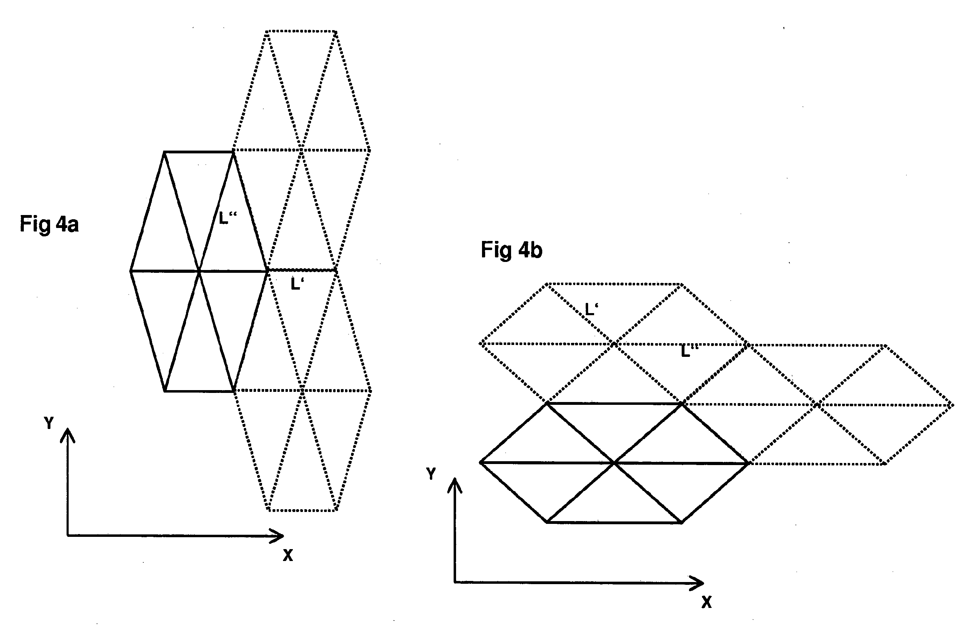

Preferably the distance L between any two connected junctions 1 is constant. However also a network stretched in at least one direction of the plane is possible, whereby the distance L' between two connected junctions, which are lying predominantly in the stretched direction, is longer than the distance L" between two connected junctions in the non-stretched direction. (See figure 4a and 4b)

These and other characteristics of the invention will be clear from the following description of preferential forms, given as a non-restrictive example with reference to the attached drawings.
- Figure 1: Schematic example of a 3D structure not belonging to the invention
- Figure 2a: Schematic example of the 3D structure not belonging to the invention - view from the top;
- Figure 2b: Side view D-D' from figure 1;
- Figure 3a: Schematic example of the 3D structure not belonging to the invention - slightly tilted 3D view;
- Figure 3b: Side view F-F'from figure 2;
- Figure 4a: Example of a network not belonging to the invention with 6 embossments intersecting in each junction with a stretched pattern in the direction of the y-ax;
- Figure 4b: Example of a network not belonging to the invention with 6 embossments intersecting in each junction with a stretched pattern in the direction of the x-ax;
- Figure 5a: Schematic drawing of a single shell heat shield;
- Figure 5b-d: Schematic drawing of a double shell heat shield;

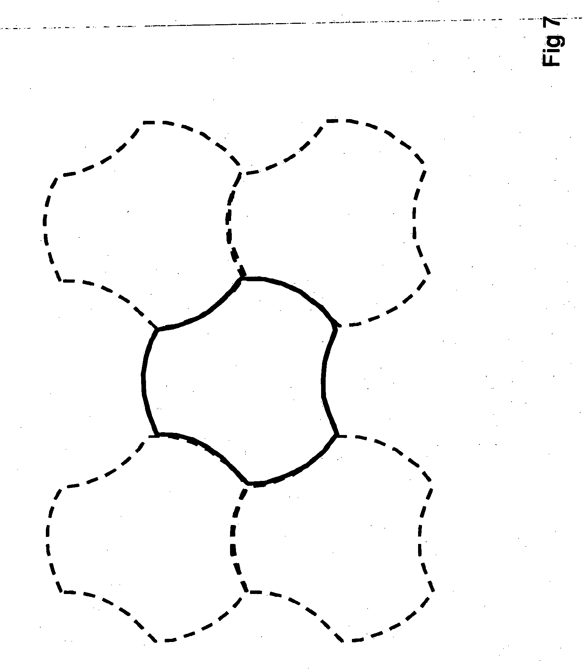

- Figure 7: Schematic example of other network not belonging to the invention
- Figure 6, 8: Schematic examples of networks according to the invention

Figure 1 and 2 show a schematic example of a 3D structured metal sheet not belonging to the invention. The x- and y- directions are in the neutral plane n of the metal sheet. The z-direction is the offset of the material out of the neutral plane of a plain sheet; this can be either by embossing or by indentations.

The embossments 2 intersect forming a continuous 3D network on the surface of the metal, sheet. These embossments 2 have all the same direction and maximum distance h from the neutral plane in the z-direction. The maximum distance h is given by the back 4 of the embossments, lying and parallel to the surface of the neutral plane.

Preferably the length L of the embossments 2 is such that connected junctions 1 are symmetrically interspersed between each other.

Preferably, a regular pattern of the embossments intersected in connecting junctions is given, for instance in essentially each connecting junctions six embossments 2 are connected. However this can also be for instance three, four, five, seven eight or more. By using essentially 6 embossments intersecting at each junction, an imaginary isosceles triangle 3 is formed between every three embossments. The material of these triangles 3 is the neutral plane, meaning that essentially no movement of material took place during the 3D structuring of the metal sheet in these areas.

In comparison to the state-of-the-art dimple pattern, where the material is stretched, forming at the top of the dimple a thinned layer of material, which can crack easily, the material in the structured metal sheet according to the invention, is placed to the top of the network structure. Particularly at the center of the junctions, where the embossments converge, essentially the most material can be found. This is one of the reasons for the increased stiffness and better fatigue behavior found in the sheet metal according to the invention. The shaded colors in figure 1-3 are showing the material distribution in the final product, whereby the darker color indicates a thinner area.

Depending on the number of embossments intersecting at a junction also other patterns of non-raised material can be formed. In the example in figure 4a the number of embossments intersecting in each junction is 3 and the non-raised material is a hexagonal. Also other irregular patterns forming a 3D network structured metal sheet, whereby the network is formed by the embossment falls in the scope of the invention as disclosed (see figure 6). Figure 8 shows another example of a pattern according to the invention whereby junctions contain different amounts of intersection, in this case either 6 or 3. This will increase the stiffness as well as the evenness of the stiffness in different directions of the plane. At the same time, if a crack occurs, it is not able to propagate to a large crack as happens with embossments according to the state of the art.

In comparison to the state of the art - where single dimple forms are raised and the network is not or is only partly raised - an inverse embossment according to the invention is created. By using this inverse pattern according to the invention more material is moved from the neutral plane to a raised plane. This leads to localized strain hardening due to forming and provides an improved nucleation resistance, as well as an overall increase in bending stiffness in different directions. Additionally due to the 3D structure network formed by multi-directional embossments direct crack propagation in the metal sheet is inhibited.

The actual length, width and height of the embossments are depending on the thickness of the sheet before embossing and the bending stiffness and tensile strength to be achieved.
Preferably the length L is much larger than the width w and the height h of the embossments

If the same patterning die is used, the width of the embossments will increase with increased thickness, due to increased amounts of material moved to these areas.

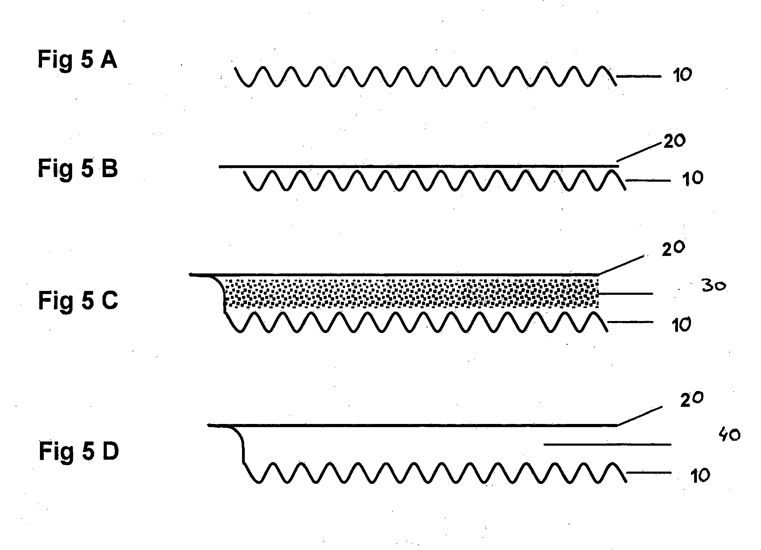

The design of the heat shield varies according to the required function and the construction space in each area of the vehicle. This space is normally up to several mm, for instance 2 to 3 mm. The 3D structured metal sheet according to the invention can be used for instance as a single shell heat shields (figure 5a) where it forms the supporting sheet (1). Eventually insulation can be attached to this single shell heat shield with a sealing foil. A single shell heat shield can have the edge crimped (not shown) for reinforcing the outer contour and enhance the handling of the parts during production and car assembly. Furthermore the material can be formed to follow the form of the object to be protected like the motor or parts of the exhaust-system.
The 3D structured metal sheet with the embossed network according to the invention can also be used in double shell heat shields (figure 5b-d). These are made of a supporting sheet (10) and a cover sheet (20) with a form of insulation (30) sandwiched between the two sheets. The cover sheet serves to attach the insulation and increases the stiffness of the component. The insulation can also be in the form of an air gap (40). Double shell heat shields are almost always crimped (not shown), basically to fix the insulation between the two outer sheets. Depending on the function the supporting and or the cover sheet can be a 3D structured metal sheet according to the invention. Additionally a stack of at least two layers of the structured metal sheet according to the invention can also be used as a heat shield.

Preferably the structured metal sheet according to the invention is only partially and/or locally embossed to obtain areas of increased stiffness, where needed keeping other areas for bending into the form of the heat shield wanted.

Preferably the structured metal sheet according to the invention is only partially and/or locally perforated with either macro perforations or micro perforations. Perforated heat shields as such are known in the art and are used for instance in multilayer heat shield used for acoustic insulation.

All direction are to be understood for explanation of the network pattern formed and not as an indication of the actual way of producing the inventive structured sheet metal material.

3D Structured metal according to the invention can be produced with the standard processes according to the state of the art in particularly the sheet can be produced by rolling, mostly between 2 rollers with at least one roller having a surface in the form of the wanted 3D structure, by embossing between two press plates - so called linear embossing - or by hydro forming. Rolling is a continuous process and pressing can only be run in a semi-continuous process. These processes normally create high strain hardening.

## Claims

1. Three dimensional (3D) structured metal sheet, for use in automotive heat shields, with a plurality of indentations or embossments whereby all the embossments (2) are protruding towards the same direction normal to the surface of the plain sheet material, defined as the neutral plane n, essentially by the same distance h away from this neutral plane, and whereby the plurality of embossments together are forming a regular network, whereby essentially each embossment intersects with at least two other embossments to form a junction (1), **characterised in that** the number of embossments converging in a junction varies throughout the pattern of the network formed.

2. 3D structured metal sheet according to claim 1, whereby the distance L between any two connected junctions is constant.

3. 3D structured metal sheet according to claim 1 or 2, whereby the form of the embossments lengthwise is elongated and preferably straight or rounded or curved.

4. 3 D structured metal sheet according to one of the preceding claims, whereby the number of embossments converging in a junction is either 3 or 6 forming a regular network pattern.

5. Heat shield for a vehicle comprising at least one layer of a 3D structured metal sheet with a plurality of indentations or embossments, all the embossments (2) are protruding towards the same direction normal to the surface of the plain sheet material, defined as the neutral plane n, essentially by the same distance h away from this neutral plane, and whereby the plurality of embossments (2) together are forming a regular network, whereby essentially each embossment intersects with at least two other embossments to form a junction (1), **characterised in that** the number of embossments converging in a junction varies throughout the pattern of the network formed.

6. Heat shield according to claim 5 whereby the at least one layer of a 3D structured metal sheet is only partially covered with the regular network.

## Patentansprüche

1. Dreidimensional (3D) strukturiertes Blech zur Verwendung bei Hitzeschilden für Kraftfahrzeuge, mit mehreren Vertiefungen oder Prägungen, wobei alle Prägungen (2) im Wesentlichen um die gleiche Entfernung h in die gleiche Richtung normal zu der als neutrale Ebene n definierten Oberfläche des glatten Blechs von dieser neutralen Ebene weg vorspringen, und wobei die mehreren Prägungen zusammen ein regelmäßiges Netz bilden, wobei im Wesentlichen jede Prägung wenigstens zwei andere Prägungen schneidet, um einen Knotenpunkt (1) zu bilden, **dadurch gekennzeichnet, dass** die Anzahl der Prägungen, die an einem Knotenpunkt aufeinandertreffen, über das Muster des gebildeten Netzes variiert.

2. Dreidimensional strukturiertes Blech nach Anspruch 1, wobei der Abstand L zwischen beliebigen zwei verbundenen Knotenpunkten konstant ist.

3. Dreidimensional strukturiertes Blech nach Anspruch 1 oder 2, wobei die Form der Prägungen in der Längsrichtung länglich und vorzugsweise gerade oder abgerundet oder gebogen ist.

4. Dreidimensional strukturiertes Blech nach einem der vorhergehenden Ansprüche, wobei die Anzahl der Prägungen, die an einem Knotenpunkt aufeinandertreffen, entweder 3 oder 6 beträgt, wodurch ein regelmäßiges Netzmuster gebildet wird.

5. Hitzeschild für ein Kraftfahrzeug, umfassend wenigstens eine Schicht eines dreidimensional strukturierten Blechs mit mehreren Vertiefungen oder Prägungen, wobei alle Prägungen (2) im Wesentlichen um die gleiche Entfernung h in die gleiche Richtung normal zu der als neutrale Ebene n definierten Oberfläche des glatten Blechs von dieser neutralen Ebene weg vorspringen, und wobei die mehreren Prägungen (2) zusammen ein regelmäßiges Netz bilden, wobei im Wesentlichen jede Prägung wenigstens zwei andere Prägungen schneidet, um einen Knotenpunkt (1) zu bilden, **dadurch gekennzeichnet, dass** die Anzahl der Prägungen, die an einem Knotenpunkt aufeinandertreffen, über das Muster des gebildeten Netzes variiert.

6. Hitzeschild nach Anspruch 5, wobei die wenigstens eine Schicht eines dreidimensional strukturierten Blechs nur teilweise von dem regelmäßigen Netz bedeckt ist.

## Revendications

1. Feuille métallique structurée en trois dimensions (3D), pour utilisation dans des protecteurs thermiques automobiles, avec une pluralité d'indentations ou de gaufrages, tous les gaufrages (2) faisant saillie dans la même direction normale à la surface du matériau de feuille uni, défini comme le plan neutre n, essentiellement de la même distance h à partir de ce plan neutre, et la pluralité de gaufrages formant ensemble un réseau régulier, essentiellement chaque gaufrage croisant au moins deux autres gaufrages pour former une jonction (1), **caractérisée en ce que** le nombre de gaufrages convergeant dans une jonction varie sur l'ensemble du motif du réseau formé.

2. Feuille métallique structurée en 3D selon la revendication 1, dans laquelle la distance L entre deux quelconques jonctions reliées est constante.

3. Feuille métallique structurée en 3D selon la revendication 1 ou 2, dans laquelle la forme des gaufrages dans le sens de la longueur est allongée et de préférence droite ou arrondie ou incurvée.

4. Feuille métallique structurée en 3D selon l'une des revendications précédentes, dans laquelle le nombre de gaufrages convergeant dans une jonction est de 3 ou de 6, formant un motif de réseau régulier.

5. Protecteur thermique pour un véhicule comprenant au moins une couche d'une feuille métallique structurée en 3D avec une pluralité d'indentations ou de gaufrages, tous les gaufrages (2) faisant saillie dans la même direction normale à la surface du matériau de feuille uni, défini comme le plan neutre n, essentiellement de la même distance h à partir de ce plan neutre, et dans lequel la pluralité de gaufrages (2) forment conjointement un réseau régulier, essentiellement chaque gaufrage croisant au moins deux autres gaufrages pour former une jonction (1), **caractérisé en ce que** le nombre de gaufrages convergeant dans une jonction varie sur l'ensemble du motif du réseau formé.

6. Protecteur thermique selon la revendication 5, dans lequel l'au moins une couche d'une feuille métallique structurée en 3D est uniquement partiellement couverte du réseau régulier.
